# EUROPÄISCHE PATENTSCHRIFT

(11) **EP 3 073 095 B1**
(45) Veröffentlichungstag und Bekanntmachung des Hinweises auf die Patenterteilung: **29.05.2019**
(21) Anmeldenummer: 16156411.7
(22) Anmeldetag: 19.02.2016
(51) Int. Cl.: F02B 75/04, F16C 7/06, F16K 27/02

(54) **HYDRAULIKVENTIL UND PLEUEL MIT EINEM HYDRAULIKVENTIL**
HYDRAULIC VALVE AND A CONNECTING ROD WITH A HYDRAULIC VALVE
VANNE HYDRAULIQUE ET BIELLE AVEC VANNE HYDRAULIQUE

(30) Priorität: 26.03.2015 DE 102015104609; 10.07.2015 DE 102015111175
(43) Veröffentlichungstag der Anmeldung: 28.09.2016
(73) Patentinhaber: Hilite Germany GmbH, 97828 Marktheidenfeld (DE)
(72) Erfinder: BALLING, Manfred, 97072 Würzburg (DE); HUTZELMANN, Stefanie, 97782 Gräfendorf (DE); SCHULZE, Dietmar, 35394 Gießen (DE); MATSCHINER, Tobias, 97828 Marktheidenfeld (DE)

(56) Entgegenhaltungen:
- EP-A1- 0 438 121
- EP-A1- 2 386 731
- DE-A1- 3 148 193
- DE-A1-102010 016 037
- DE-A1-102013 107 127
- US-A1- 2010 218 746

## Beschreibung

### Technisches Gebiet

Die Erfindung betrifft ein Hydraulikventil, insbesondere zum Schalten eines Stellkolbens einer Exzenter-Verstelleinrichtung in einem Pleuel für eine Brennkraftmaschine mit variabler Verdichtung eines Kraftfahrzeugs sowie ein Pleuel mit einem solchen Hydraulikventil.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulischen Umschaltventilen eine Exzenter-Verstelleinrichtung eines Pleuels betätigen.

Ein gattungsgemäßes Pleuel ist beispielsweise aus der DE 10 2013 107 127 A1 bekannt. In dem Pleuel ist ein Hydraulikventil vorgesehen, welches einen hydraulischen Versorgungsanschluss aufweist. An diesem Versorgungsanschluss liegt ein hydraulischer Druck an. Dieser hydraulische Druck verschiebt einen Hydraulikkolben des Hydraulikventils gegen die Kraft einer vorgespannten Feder. Der Hydraulikkolben verbleibt in einem niedrigen Druckbereich des Versorgungsanschlusses infolge der Vorspannung der Feder unverändert in einer stabilen Niederdrucklage.

In dieser stabilen Niederdrucklage ist der Versorgungsanschluss hydraulisch mit der ersten Verdrängerkammer verbunden. Damit entleert sich die erste Verdrängerkammer stoßweise immer dann zum Versorgungsanschluss hin, wenn deren Verdrängerkammerdruck bedingt durch Gas- oder Massenkräfte am Pleuel bzw. Exzenter größer ist als der Druck am Versorgungsanschluss.

Der Hydraulikkolben weist eine Kolbenfläche auf. Liegt an dieser Kolbenfläche ein vom Versorgungsanschluss kommender Druck an, der in einem hohen Druckbereich liegt, so kommt der Hydraulikkolben zum Anliegen an einem Anschlag. In dieser stabilen Hochdrucklage ist der Versorgungsanschluss mit der zweiten Verdrängerkammer verbunden. Damit entleert sich die zweite Verdrängerkammer stoßweise immer dann zum Versorgungsanschluss hin, wenn deren Verdrängerkammerdruck bedingt durch Gas- oder Massenkräfte am Pleuel. bzw. am Exzenter größer ist als der Druck am Versorgungsanschluss.

Beim Verstellen wird also nicht die Verdrängerkammer über den relativ schwachen Druck des Versorgungsanschlusses befüllt. Stattdessen werden die Verdrängerkammern über die hohen Kräfte am Pleuel gegen den relativ niedrigen Druck am Versorgungsanschluss entleert. Über in den Verdrängerkammern angeordneten Kolben wird ein Exzenterhebel betrieben, der wiederum über den Exzenter eine effektive Pleuellänge verstellt und so die variable Verdichtung der Brennkraftmaschine steuert.

### Offenbarung der Erfindung

Eine Aufgabe ist es, ein Pleuel mit einem solchen Hydraulikventil zu schaffen, welches eine geringe Leckage aufweist.

Die vorgenannte Aufgabe wird nach einem Aspekt der Erfindung gelöst mit den Merkmalen des unabhängigen Anspruchs.

Günstige Ausgestaltungen und Vorteile der Erfindung ergeben sich aus den weiteren Ansprüchen, der Beschreibung und der Zeichnung.

Die Erfindung betrifft nach einem weiteren Aspekt ein Pleuel mit einem in einer Ventilaufnahmebohrung des Pleuels angeordneten Hydraulikventil mit einem Hydraulikfluid, insbesondere zum Schalten eines Stellkolbens in dem Pleuel für eine variable Verdichtung einer Brennkraftmaschine. Der Pleuel umfasst ein Ventilgehäuse, das einen ersten Arbeitsanschluss und einen zweiten Arbeitsanschluss sowie einen Versorgungsanschluss aufweist, der mit einem hydraulischen Druck des Hydraulikfluids beaufschlagbar ist. Dadurch ist ein in dem Ventilgehäuse angeordneter beweglicher Kolben gegen die Kraft einer vorgespannten Feder verschiebbar.

Erfindungsgemäß ist das Hydraulikventil vom Pleuel mechanisch entkoppelt vorgesehen.

Eine mechanische Entkopplung zwischen Hydraulikventil und Ventilaufnahmebohrung des Pleuels ist besonders sinnvoll in Einsatzfällen, bei denen sehr hohe Hydraulikdrücke auftreten, die beispielsweise bei einem Pleuel für eine variable Verdichtung bis zu 380 bar betragen können. Durch die hohen Gas- und Massenkräfte ergeben sich Verformungen der Ventilaufnahmebohrung, die durch konventionelle O-Ring-Dichtungen nicht zuverlässig überbrückt werden können, so dass eine dauerhafte Dichtfunktion nicht gewährleistet wäre. Durch die mechanische Entkopplung von Hydraulikventil und Pleuel ergibt sich die Möglichkeit, beispielsweise eine druckaktivierte Dichtung einzusetzen, die durch den Hydraulikdruck radial nach außen aufgeweitet wird und so den abzudichtenden Spalt überbrücken kann. Damit kann ein zuverlässiger Betrieb des Hydraulikventils in dem Pleuel dauerhaft sichergestellt werden.

Gemäß einer vorteilhaften Ausgestaltung kann das Hydraulikventil mit einem radialen Spiel von maximal 100 µm, bevorzugt maximal 80 µm, ganz besonders bevorzugt maximal 50 µm in die Ventilaufnahmebohrung des Pleuels eingebaut vorgesehen sein. Durch das auf Grund der mechanischen Entkopplung von Hydraulikventil und Pleuel sich ergebende radiale Spiel kann sichergestellt werden, dass sich das Hydraulikventil relativ zu dem Pleuel in der Ventilaufnahmebohrung in axialer und radialer Richtung bewegen kann, was für eine ordnungsgemäße Funktion des Hydraulikventils, auch in der aufgrund der hohen Gas- und Massenkräfte verformbaren Ventilaufnahmebohrung, günstig ist. Durch das radiale Spiel kann sich eine Dichtung zwischen Hydraulikventil und Wand der Ventilaufnahmebohrung, aktiviert durch den Hydraulikdruck, in ihrem Dichtsitz bewegen und an die Wand der Ventilaufnahmebohrung dichtend anlegen. Dies wird dadurch ermöglicht, dass das Hydraulikfluid zwischen der Wand der Ventilaufnahmebohrung und dem Ventilgehäuse auf Grund des radialen Spiels eindringen und so die Dichtung radial nach außen drücken kann, wodurch die Dichtfunktion zwischen Hydraulikventil und Pleuel sich zuverlässig einstellt.

Die Arbeitsanschlüsse sind mittels in umlaufenden Ringnuten angeordneten Dichtelementen gegen den Versorgungsanschluss und/oder gegen die Atmosphäre abgedichtet vorgesehen. Mit dem Hydraulikventil kann unter Druck stehendes Öl als Hydraulikfluid aus einer Verdrängerkammer des Stützkolbens über einen Arbeitsanschluss zu dem Versorgungsanschluss des Hydraulikventils geführt werden. Vom Versorgungsanschluss wird das Öl über einen Kanal zum Pleuellager geführt. Die Schaltfunktion des Hydraulikventils kann nur bestimmungsgemäß ausgeführt werden, wenn eine Leckage des Hydraulikfluids zwischen den beiden Arbeitsanschlüssen und dem Versorgungsanschluss möglichst gering gehalten wird, so dass der eine oder der andere Arbeitsanschluss gezielt auf den Versorgungsanschluss durchgeschaltet werden kann. Dies wiederum ist nur möglich, wenn Dichtelemente die Arbeitsanschlüsse und den Versorgungsanschluss gegeneinander und gegen die Umgebung abdichten und so ein Übersprechen oder eine Leckage gering halten.

Die Dichtelemente sind in umlaufenden Ringnuten angeordnet. Umlaufende Ringnuten sind günstig, da Dichtelemente typischerweise als O-Ringe oder ringförmige Elemente ausgeführt sind, die durch die Ringnuten in einer vorgegebenen Position gehalten werden, die sowohl bei der Montage in der Ventilaufnahmebohrung als auch im Betrieb unter hohem Hydraulikdruck zuverlässig eingehalten werden kann.

Die Dichtelemente sind als Dichtringe vorgesehen, welche derart in ihrem Dichtsitz verform- oder zumindest bewegbar ausgebildet sind, dass die Dichtelemente mittels des an dem jeweiligen Arbeitsanschluss anliegenden hydraulischen Druckes an eine Wand der Ventilaufnahmebohrung und eine dem jeweiligen Arbeitsanschluss abgewandte Seitenfläche der Ringnuten dichtend anlegbar sind. Bei den hohen Gas- und Massenkräften weiten sich die Ventilaufnahmebohrungen signifikant auf, so dass konventionelle O-Ringe nicht mehr dichtend anliegen würden. Das erfindungsgemäße Dichtelement wird aber durch den Hydraulikdruck in einer solchen Weise aktiviert, dass es durch das Hydraulikfluid radial nach außen gedrückt wird, sich dadurch sogar von einem Dichtsitz in dem Ventilkörper abheben und in radialer Richtung an die Wand der Ventilaufnahmebohrung dichtend angedrückt werden kann. Das Dichtelement kann sich demzufolge durch den Hydraulikdruck auch verformen oder zumindest bewegen, und zwar in einer Weise, dass es durch den Hydraulikdruck in einen Dichtsitz des Ventilkörpers und/oder gegen die Wand der Ventilbohrung dichtend angelegt werden kann.

Gemäß einer vorteilhaften Ausgestaltung können die Dichtelemente, insbesondere in radialer Richtung, zweiteilig vorgesehen sein. Eine solche druckaktivierte Dichtung lässt sich mit einem konventionellem O-Ring, der aus rein elastischem Material besteht, nicht so darstellen, dass die Dichtfunktion auch bei größeren Verformungen der Ventilaufnahmebohrung sichergestellt wäre. Aus diesem Grund ist es zweckmäßig, ein festeres Material einzusetzen oder, in einer alternativen Ausführungsform, ein zweigeteiltes Dichtelement vorzusehen. Beispielsweise kann ein elastischer O-Ring aus Gummi als Vorspannelement radial innen direkt auf dem Ventilgehäuse angeordnet sein, über dem ein Gleitring beispielsweise aus Teflon radial außerhalb angeordnet ist. So kann der O-Ring den Teflonring auf Grund seiner Elastizität radial nach außen drücken, während durch den Hydraulikdruck der Teflonring dann weiter radial nach außen gedrückt wird und so dafür gesorgt wird, dass der Teflonring dichtend an der Wand der Ventilaufnahmebohrung anliegt.

Gemäß einer vorteilhaften Ausgestaltung können die Dichtelemente aus Kunststoff, insbesondere PTFE oder PEEK gebildet sein. Dichtelemente, die nicht als rein elastische O-Ringe ausgelegt sind, können beispielsweise aus den Kunststoffen PTFE oder PEEK gebildet sein. Es ist auch denkbar, dass die Kunststoffe mit Glasfasern oder Kohlefasern verstärkt sein können, um noch mehr Festigkeit bei den hohen auftretenden Kräften zu erreichen und ein mögliches Versagen der Dichtelemente auch bei diesen Kräften zu vermeiden

Gemäß einer vorteilhaften Ausgestaltung können die Dichtelemente als Metalldichtung vorgesehen sein. Eine alternative Ausführungsform eines nicht-elastischen Dichtelements stellt eine Metalldichtung dar, die insbesondere unter hohen Hydraulikdrücken plastisch verformbar ist und sich an die Wand der Ventilaufnahmebohrung so dichtend anlegen kann. Schrumpft der Durchmesser der Ventilaufnahmebohrung bei nachlassenden oder fehlenden Gas- und Massenkräften wieder radial nach innen, so kann sich eine Metalldichtung auch wieder plastisch zurückverformen, so dass auch bei einem niedrigeren Hydraulikdruck die Dichtfunktion noch gewährleistet ist.

Gemäß einer vorteilhaften Ausgestaltung kann die Metalldichtung als Presshülse vorgesehen ist, in welche das Ventilgehäuse eingeschrumpft sein. Eine zuverlässige Dichtfunktion kann sichergestellt werden, wenn die Metalldichtung als Presshülse vorgesehen ist, die auf das Ventilgehäuse aufgeschrumpft oder in welche das Ventilgehäuse eingeschrumpft wird, wobei Kontaktstellen bzw. Dichtstellen Pleuel zu Presshülse und Presshülse zu Ventilgehäuse sind axial benachbart vorgesehen sind. Dadurch kann eine außen an der Presshülse durch Pleuelbelastung verursachte Verformung von dem Ventilgehäuse ferngehalten werden, so dass mit großer Sicherheit eine dauerhafte Dichtung zwischen Ventilgehäuse und Metalldichtung erreicht ist, die auch bei hohen Gas- und Massenkräften zu einer zuverlässigen Dichtwirkung zwischen Ventilgehäuse und Wand der Ventilaufnahmebohrung führt.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine schematische Darstellung eines bekannten Pleuels für eine variable Verdichtung einer Brennkraftmaschine eines Kraftfahrzeugs;
- Fig. 2: ein in die Ventilaufnahmebohrung des Pleuels eingebautes Hydraulikventil nach einem Ausführungsbeispiel der Erfindung im Längsschnitt;
- Fig. 3a: das Hydraulikventil aus Fig. 2 in vergrößerter Darstellung;
- Fig. 3b: eine Teilansicht des Hydraulikventils aus Fig. 2 mit Fokus auf zwei Dichtelemente;
- Fig. 4: ein Hydraulikventil mit zweiteiligen Dichtelementen nach einem weiteren Ausführungsbeispiel der Erfindung in einem Längsschnitt; und
- Fig. 5: ein Hydraulikventil mit einer Metalldichtung nach einem weiteren Ausführungsbeispiel der Erfindung in einem Längsschnitt.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

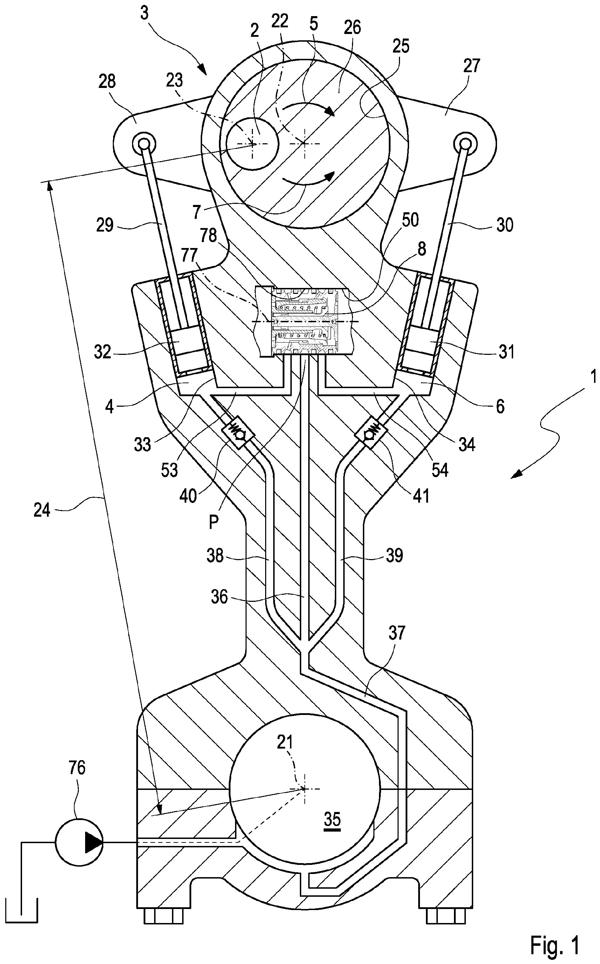

Fig. 1 zeigt ein bekanntes Pleuel 1 für eine variable Verdichtung einer Brennkraftmaschine eines Kraftfahrzeugs. Das Pleuel 1 weist ein oberes Kolbenbolzenlagerauge 2 auf, in dem ein nicht näher dargestellter Kolbenbolzen eingesteckt ist. Dieser Kolbenbolzen ist in üblicher Weise fest in einen Brennraumkolben des Verbrennungsmotors eingesteckt. Das Kolbenbolzenlagerauge 2 ist mittels einer Exzenter-Verstelleinrichtung 3 um eine Schwenkachse 22 schwenkbar, die parallel versetzt zur Längsachse 23 des Kolbenbolzenlagerauges 2 liegt. Somit ist es möglich, das Kolbenbolzenlagerauge 2 in seinem Abstand 24 als effektiver Pleuellänge zu einer Pleuellagerachse 21 eines Pleuellagers 35 zu verändern. Damit kann eine variable Verdichtung des Brennraums verwirklicht werden.

Die Exzenter-Verstelleinrichtung 3 umfasst einen schwenkbar in einer Bohrung 25 des Pleuels 1 angeordneten Exzenter 26. Der Exzenter 26 ist mit einem Exzenterhebel verbunden, von welchem sich zwei Arme 27, 28 diametral zueinander hinfort erstrecken. An den Enden dieser beiden Arme 27, 28 greifen Stützstangen (Exzenterstangen) 29, 30 an. Diese Stützstangen 29, 30 sind gelenkig mit zwei kleinen Stellkolben 31, 32 verbunden. Somit ist es möglich, den Exzenter 26 innerhalb der Bohrung 25 des Pleuels 1 zu schwenken. Dabei fährt der eine kleine Stellkolben 31 bzw. 32 aus einer zylinderförmigen Bohrung 34 bzw. 33 innerhalb des Pleuels 1 aus, während der andere Stellkolben 32 bzw. 31 in eine zylinderförmige Bohrung 33 bzw. 34 des Pleuels 1 einfährt. Fährt der in der Zeichnung linke Linearkolben 32 ein, so wird der Exzenter 26 in der Drehrichtung 7 entgegen dem Uhrzeigersinn geschwenkt. Fährt hingegen der in der Zeichnung rechte Linearkolben 31 ein, so wird der Exzenter 26 in Drehrichtung 5 entsprechend dem Uhrzeigersinn geschwenkt. Die Drehung in Richtung des Uhrzeigersinns bewirkt eine Verlagerung des Kolbenbolzenlagerauges 2 weiter nach oben bzw. weiter von der Pleuellagerachse 21 hinfort. Damit wird der Abstand 24 als effektive Pleuellänge vergrößert und somit wird die Verdichtung im Brennraum erhöht. Bei maximal eingefahrenem rechten Linearkolben 31 befindet ist der Brennraum auf die Stufe der maximalen Verdichtung eingestellt. Analog bewirkt ein Verschwenken des Exzenters 26 entgegen dem Uhrzeigersinn - d.h. in Drehrichtung 7 - eine Verringerung der Verdichtung bis hin zur Stufe der minimalen Verdichtung.

Um diese beiden Stufen der Verdichtung zu steuern, ist beispielsweise ein Hydraulikventil 8 mit einer Ventillängsachse 77 in einer Ventilaufnahmebohrung 50 angeordnet. Mit diesem Hydraulikventil 8 kann unter Druck stehendes Öl als Hydraulikfluid aus einer Verdrängerkammer 4 bzw. 6 zu einem Versorgungsanschluss P des Hydraulikventils 8 geführt werden. Vom Versorgungsanschluss P wird das Öl über einen Kanal 36, 37 zum Pleuellager 35 geführt, wo es in eine nicht näher dargestellte Ölversorgung eines Exzenterzapfens der Kurbelwelle eingeführt wird. Dieser Exzenterzapfen ist in üblicher Weise drehbar innerhalb des Pleuellagers 35 angeordnet. Bei einem 4-Zylinder-Motor sind beispielsweise vier solcher Exzenterzapfen an der Kurbelwelle angeordnet. Demzufolge sind bei einem solchen 4-Zylinder-Motor auch vier Pleuel 1 mit insgesamt vier Pleuellagern 35 vorgesehen.

Die Ölversorgung innerhalb des Pleuellagers 35 kommt von der Ölpumpe 76 des Verbrennungsmotors und versorgt über Zufuhrleitungen 38, 39 die beiden Verdrängerkammern 4, 6. Dabei ist in die beiden Zuführleitungen 38, 39 jeweils ein Rückschlagventil 40 bzw. 41 eingesetzt, welches in Flussrichtung von der jeweiligen Verdrängerkammer 4 bzw. 6 zu der Ölversorgung schließt und in die entgegengesetzte Flussrichtung öffnet.

Die vom Brennraumkolben über das Kolbenbolzenlagerauge 2 auf die Stützstangen 29, 30 übertragenen Kräfte sind sehr hoch. Diese hohen Kräfte sind um weit größer als die Kräfte, die am Linearkolben 31 bzw. 32 infolge des Druckes der Ölpumpe 76 wirken. Damit kann das Hydraulikventil 8 je nach Stellung Druck aus der einen Verdrängerkammer 6 oder der anderen Verdrängerkammer 4 zur Ölversorgung zurück drücken. Wird die eine Verdrängerkammer 6 bzw. 4 infolge der hohen Kräfte des Brennraumkolbens verkleinert, so saugt die andere Verdrängerkammer 4 bzw. 6 über deren sich dann öffnendes Rückschlagventil 40 bzw. 41 Öl von der Ölversorgung ein. Auf dem Weg von der Ölpumpe 76 zur Ölversorgung innerhalb der Kurbelwelle sind weitere Verbraucher angeschlossen, die Öl abzweigen. Insbesondere geschmierte Lager senken den Öldruck ab. Die Viskosität des Öls spielt auch eine Rolle für den Öldruck.

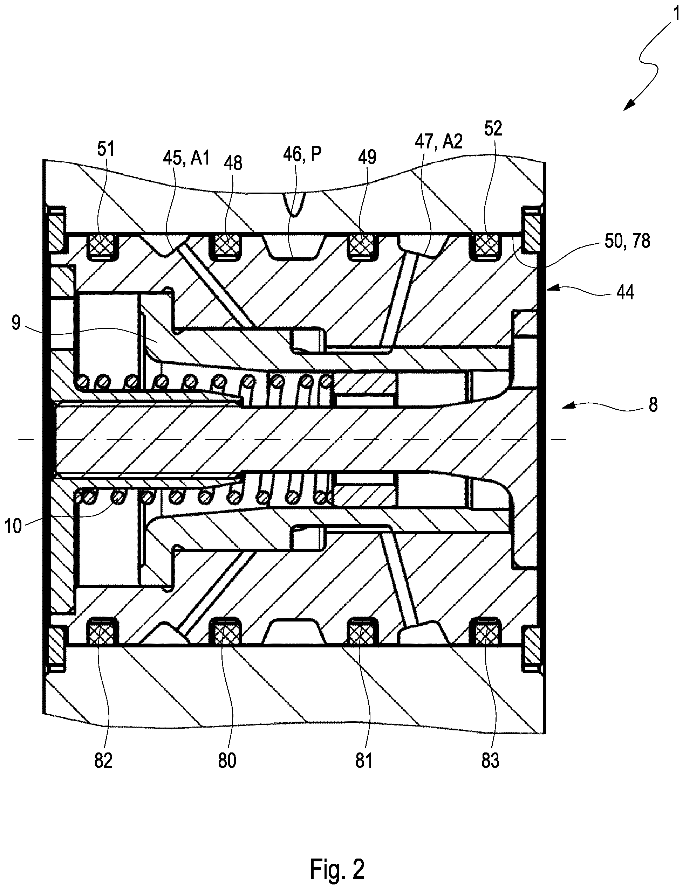

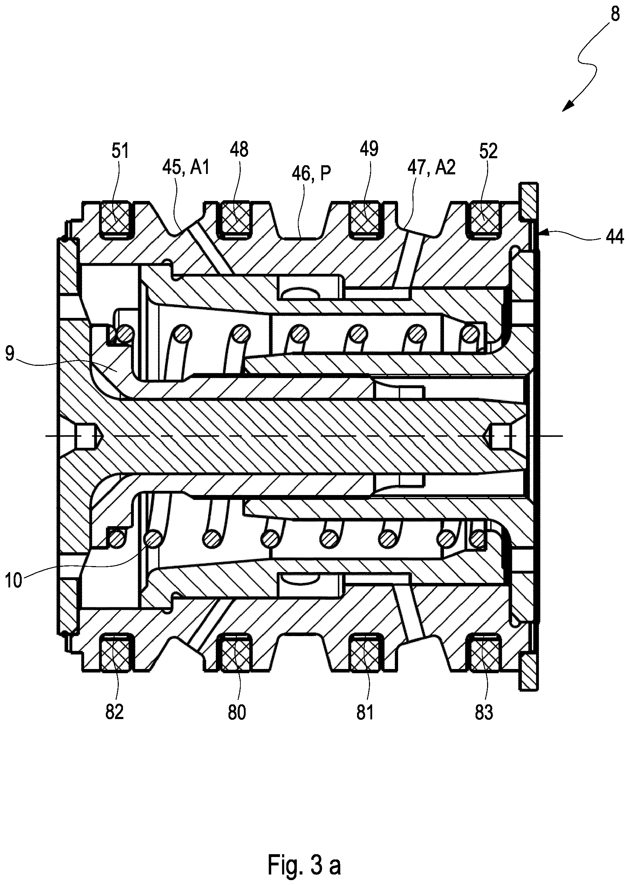

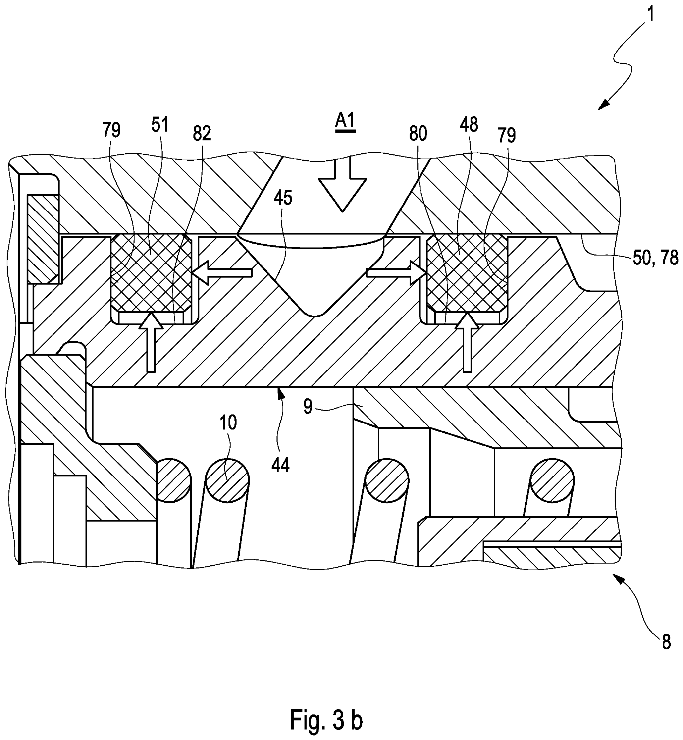

Figur 2 zeigt ein in die Ventilaufnahmebohrung 50 des Pleuels 1 eingebautes Hydraulikventil 8 nach einem Ausführungsbeispiel der Erfindung im Längsschnitt, während in Figur 3a das Hydraulikventil 8 in vergrößerter Darstellung und in Figur 3b eine Teilansicht des Hydraulikventils 8 mit Fokus auf zwei Dichtelemente 48, 51 dargestellt ist.

Das in den Fig. 2 und 3a, 3b dargestellte Hydraulikventil 8, das insbesondere zum Schalten des Stellkolbens 31, 32 in dem Pleuel 1 für eine variable Verdichtung einer Brennkraftmaschine vorgesehen ist, weist ein buchsenförmiges Ventilgehäuse 44 auf, welches außen drei axial beabstandet zueinander angeordnete Ringnuten 45, 46, 47 aufweist. Der mittleren Ringnut 46 ist der Versorgungsanschluss P zugeordnet, der mit einem hydraulischen Druck des Hydraulikfluids beaufschlagbar ist.

Dadurch ist ein in dem Ventilgehäuse 44 angeordneter beweglicher Kolben 9, welcher als Stufenkolben ausgebildet ist, gegen die Kraft der vorgespannten Feder 10 verschiebbar. Die beiden äußeren Ringnuten 45 und 47 stellen Arbeitsanschlüsse A1 und A2 dar.

Die Ringnuten 45, 46, 47 sind voneinander mittels Dichtelementen 48, 49, die hier als Dichtringe in umlaufenden Ringnuten 80, 81 vorgesehen sind, hydraulisch getrennt. Das Hydraulikventil 8 ist in der Ventilaufnahmebohrung 50 im Pleuel 1 eingesetzt. Um einen Druckverlust bzw. Leckagen der beiden äußeren Ringnuten 45, 47 zu verhindern, sind weitere Dichtringe 51, 52 in umlaufenden Ringnuten 82, 83 vorgesehen. Die beiden äußeren Ringnuten 45, 47 führen jeweils über einen Kanal 53, 54 zur zugehörigen Verdrängerkammer 4 bzw. 6.

Ein Dichtspalt zwischen dem Gehäuse 44 und dem Kolben 9 ist möglichst klein ausgeführt. Die am Pleuel 1 wirkenden Kräfte führen zu einer Verformung der Ventilaufnahmebohrung 50. Diese Verformung darf die Funktion des Hydraulikventils 8 jedoch nicht beeinträchtigen. Um dies zu verhindern, ist das Hydraulikventil 8 vom Pleuel 1 mechanisch entkoppelt vorgesehen.

Hierfür wird das Hydraulikventil 8 mit einem radialen Spiel in die Ventilaufnahmebohrung 50 eingebaut, so dass eine Relativbewegung zum Pleuel 1 sichergestellt ist. Für den bestimmungsgemäßen Einbau in die Ventilaufnahmebohrung 50 ist das Ventilgehäuse 44 mit radialem Spiel zu der Wand 78 der Ventilaufnahmebohrung 50 von maximal 100 µm, bevorzugt maximal 80 µm, ganz besonders bevorzugt maximal 50 µm vorgesehen. Durch das radiale Spiel kann sichergestellt werden, dass sich das Hydraulikventil 8 relativ zu dem Pleuel 1 in der Ventilaufnahmebohrung 50 in axialer und radialer Richtung bewegen kann, was für eine ordnungsgemäße Funktion des Hydraulikventils 8, auch in der aufgrund der hohen Gas- und Massenkräfte verformbaren Ventilaufnahmebohrung 50, günstig ist. Durch das radiale Spiel kann sich die Dichtung 48, 49, 51, 52, aktiviert durch den Hydraulikdruck, in ihrem Dichtsitz bewegen und an die Wand 78 der Ventilaufnahmebohrung 50 dichtend anlegen. Dies wird dadurch ermöglicht, dass das Hydraulikfluid zwischen der Wand 78 der Ventilaufnahmebohrung 50 und dem Ventilgehäuse 44 auf Grund des radialen Spiels eindringen kann.

Die Dichtelemente 48, 49, 50, 51 haben die Aufgabe, die Ringnuten 45, 47 der Arbeitsanschlüsse A1, A2 gegen den Versorgungsanschluss P bzw. die Atmosphäre abzudichten. Die Dichtelemente 48, 49, 51, 52 werden durch den hydraulischen Druck an die Wand 78 der Ventilaufnahmebohrung 50 dichtend angelegt. Der relativ hohe Druck in den Ringnuten 45, 47 bewegt die Dichtungen wie in Fig. 3a und Fig. 3b dargestellt radial nach außen, so dass sie an der Wand 78 der Ventilaufnahmebohrung anliegen.

Um ein sicheres Anlegen der Dichtelemente 48, 49, 51, 52 an die Wand 78 der Ventilaufnahmebohrung 50 zu erreichen, ist ein Überstand eines Außendurchmessers der Dichtelemente 48, 49, 51, 52 zu einem Außendurchmesser des Ventilgehäuses 44 im nichteingebauten Zustand des Hydraulikventils von mindestens 50 µm, bevorzugt mindestens 100 µm, ganz besonders bevorzugt mindestens 150 µm vorgesehen. Die Dichtelemente 48, 49, 51, 52 sind in den umlaufenden Ringnuten 80, 81, 82, 83 angeordnet. Die Dichtelemente 48, 49, 51, 52 sind nach erfolgter Montage in den Ringnuten 80, 81, 82, 83 auf ein Sollmaß kalibrierbar vorgesehen. Um sicherzugehen, dass der geforderte Überstand des Außendurchmessers des Dichtelements 48, 49, 51, 52 über den Außendurchmesser des Ventilgehäuses 44 und überhaupt ein geforderter absoluter Außendurchmesser des Dichtelements 48, 49, 51, 52 eingehalten wird, ist es zweckmäßig, das Dichtelement 48, 49, 51, 52 nach Montage in den Ringnuten 80, 81, 82, 83 auf dem Ventilgehäuse 44 zu kalibrieren. Dies kann beispielsweise durch Einpressen des Hydraulikventils 8 mit montierten Dichtelementen 48, 49, 51, 52 in einen Trichter erfolgen.

Zweckmäßigerweise werden die Dichtelemente 48, 49, 51, 52 in umlaufenden Ringnuten 80, 81, 82, 83 angeordnet, um eine Position der Dichtelemente 48, 49, 51, 52 bei der Montage des Hydraulikventils 8 in der Ventilaufnahmebohrung 50 des Pleuels 1 sowie auch im Betrieb sicherzustellen, insbesondere, wenn die Dichtelemente 48, 49, 51, 52 aktiviert durch den Hydraulikdruck sich auch noch bewegen können. Für die Funktion des Hydraulikventils 8 ist es wesentlich, dass die Dichtelemente 48, 49, 51, 52 an ihrer vorgesehenen Position verbleiben, um die Abdichtung zwischen den beiden Arbeitsanschlüssen A1, A2 und dem Versorgungsanschluss P gegeneinander und zur Atmosphäre sicherzustellen. Diese Position muss auch bei Hydraulikdruck-bedingter Verformung der Ventilaufnahmebohrung 50 eingehalten werden.

Die Dichtelemente 48, 49, 51, 52 sind vorzugsweise aus Kunststoff, insbesondere PTFE oder PEEK gebildet. Es ist auch denkbar, dass die Kunststoffe mit Glasfasern oder Kohlefasern verstärkt sein können, um noch mehr Festigkeit bei den hohen auftretenden Kräften zu erreichen und ein mögliches Versagen der Dichtelemente 48, 49, 51, 52 auch bei diesen Kräften zu vermeiden.

Insbesondere aus Fig. 3b ist ersichtlich, dass die Dichtelemente 48, 49, 51, 52 mittels des an dem jeweiligen Arbeitsanschluss A1, A2 anliegenden hydraulischen durch die Pfeile dargestellten Druckes an die Wand 78 der Ventilaufnahmebohrung 50 und eine dem jeweiligen Arbeitsanschluss A1, A2 abgewandte Seitenflächen 79 der Ringnuten 80, 81, 82, 83 dichtend angelegt werden. Auf diese Weise ist gewährleistet, dass verschiedene Bereiche des Spalts zwischen Ventilgehäuse 44 und Wand 78 der Ventilaufnahmebohrung 50, die axial anschließend angeordnet sind, auch zuverlässig gegeneinander abgedichtet werden können. So können die beiden Arbeitsanschlüsse A1, A2 und der Versorgungsanschluss P gegeneinander und gegen die Atmosphäre zuverlässig abgedichtet werden.

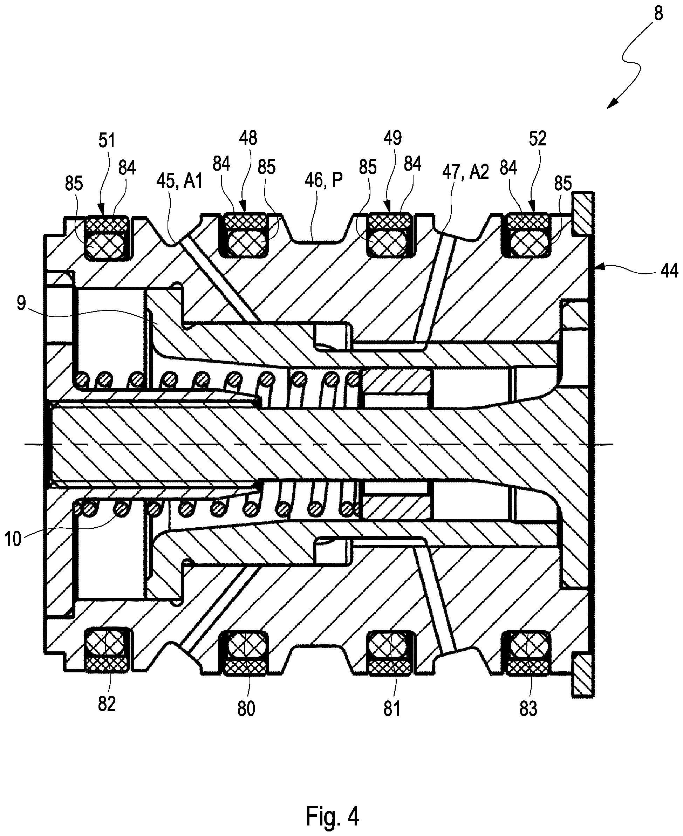

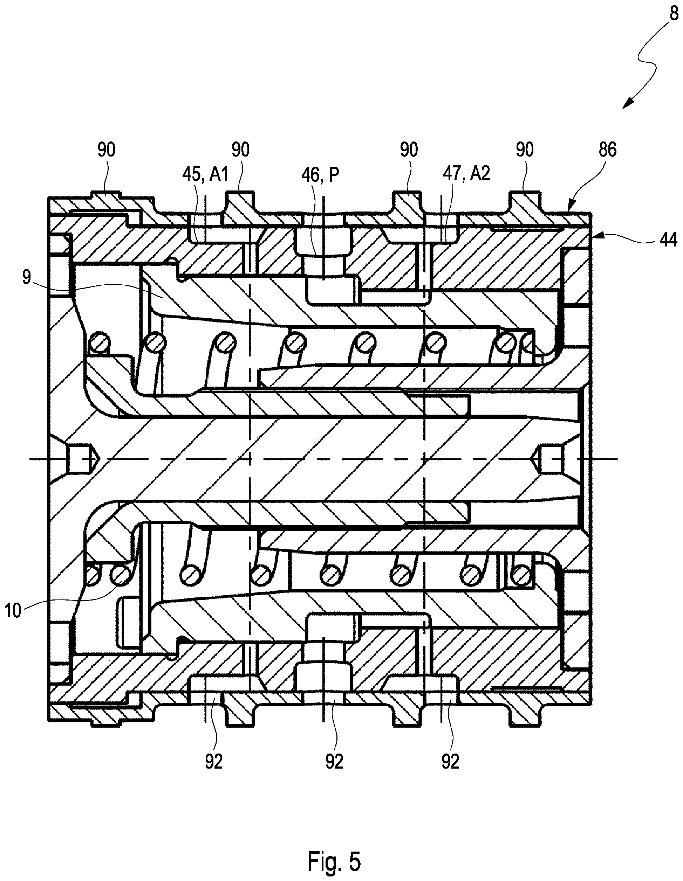

Fig. 4 und 5 zeigen weitere Ausführungsbeispiele, welche sich lediglich in der Ausgestaltung der Dichtelemente 48, 49, 51, 52 des Hydraulikventils 8 unterscheiden.

Fig. 4 zeigt zweiteilige Dichtelemente 48, 49, 51, 52. Diese weisen jeweils einen Kunststoffdichtring 84 und einen Gummidichtring 85 als Vorspannelement auf. Beispielsweise kann ein elastischer O-Ring 85 aus Gummi als Vorspannelement radial innen direkt auf dem Ventilgehäuse 44 angeordnet sein, über dem ein Gleitring 84 beispielsweise aus Teflon radial außerhalb angeordnet ist. Der O-Ring 85 ist als typischer O-Ring mit rundem Querschnitt ausgebildet, während der Teflonring 84 mit rechteckförmigem Querschnitt ausgebildet ist. So kann der O-Ring 85 den Teflonring 84 auf Grund seiner Elastizität radial nach außen drücken, während durch den Hydraulikdruck der Teflonring 84 dann weiter radial nach außen gedrückt wird und so dafür gesorgt wird, dass der Teflonring 84 mit seiner ebenen Oberfläche, da der Teflonring 84 nicht elastisch verformbar ist, dichtend an der Wand der Ventilaufnahmebohrung 78 anliegt.

Das weitere, in Fig. 5 dargestellte Ausführungsbeispiel weist dagegen eine Metalldichtung 86 auf. Die Metalldichtung 86 ist beispielsweise als Presshülse vorgesehen, in welche das Ventilgehäuse 44 eingeschrumpft wird.

Eine alternative Ausführungsform eines nicht-elastischen Dichtelements 48, 49, 51, 52 stellt eine Metalldichtung 86 dar, die insbesondere unter hohen Hydraulikdrücken plastisch verformbar ist und sich an die Wand 78 der Ventilaufnahmebohrung 50 so dichtend anlegen kann. Schrumpft der Durchmesser der Ventilaufnahmebohrung 50 bei nachlassenden oder fehlenden Gas- und Massenkräften wieder radial nach innen, so kann sich eine Metalldichtung 86 auch wieder zurückverformen, so dass auch bei einem niedrigeren Hydraulikdruck die Dichtfunktion noch gewährleistet ist.

Eine zuverlässige Dichtfunktion kann sichergestellt werden, wenn die Metalldichtung 86 als Presshülse vorgesehen ist, die auf das Ventilgehäuse 44 aufgeschrumpft oder in welche das Ventilgehäuse 44 eingeschrumpft wird. Dadurch ist mit großer Sicherheit eine dauerhafte Dichtung zwischen Ventilgehäuse 44 und Metalldichtung 86 erreicht, die auch bei hohen Kräften zu einer zuverlässigen Dichtwirkung zwischen Ventilgehäuse 44 und Wand 78 der Ventilaufnahmebohrung 50 führt.

Die Metalldichtung 86 weist an ihrem äußeren Umfang Dichtrippen 90 auf, welche sich an die Wand 78 der Ventilaufnahmebohrung 50 dichtend anlegen können und so eine zuverlässige Dichtwirkung zwischen den beiden Arbeitsanschlüssen A1, A2 und dem Versorgungsanschluss P sowie der Umgebung bewirken.
Kontaktstellen bzw. Dichtstellen Pleuel 1 zu Presshülse und Presshülse zu Ventilgehäuse 44 sind axial benachbart vorgesehen, wodurch eine außen an der Presshülse durch Pleuelbelastung verursachte Verformung von dem Ventilgehäuse 44 ferngehalten werden kann. In der als Presshülse ausgeführten Metalldichtung 86 sind weiter Durchbrüche 92 vorgesehen, um die beiden Arbeitsanschlüssen A1, A2 und dem Versorgungsanschluss P mit dem Hydraulikfluid von außen zu versorgen. Dadurch wird eine funktionelle Dichtwirkung der Metalldichtung 86 wie mit einzelnen Dichtringen erreicht.

## Patentansprüche

1. Pleuel (1) mit einem in einer Ventilaufnahmebohrung (50) des Pleuels (1) angeordneten Hydraulikventil (8) mit einem Hydraulikfluid, insbesondere zum Schalten eines Stellkolbens (31, 32) in dem Pleuel (1) für eine variable Verdichtung einer Brennkraftmaschine, umfassend ein Ventilgehäuse (44), das einen ersten Arbeitsanschluss (A1) und einen zweiten Arbeitsanschluss (A2) sowie einen Versorgungsanschluss (P) aufweist, der mit einem hydraulischen Druck des Hydraulikfluids beaufschlagbar ist, wodurch ein in dem Ventilgehäuse (44) angeordneter beweglicher Kolben (9) gegen die Kraft einer vorgespannten Feder (10) verschiebbar ist, wobei die Arbeitsanschlüsse (A1, A2) mittels in umlaufenden Ringnuten (80, 81, 82, 83) angeordneten Dichtelementen (48, 49, 51, 52) gegen den Versorgungsanschluss (P) und/oder gegen die Atmosphäre abgedichtet vorgesehen ist,
**dadurch gekennzeichnet, dass** die Dichtelemente (48, 49, 51, 52) als Dichtringe vorgesehen sind, welche derart in ihrem Dichtsitz verform- oder zumindest bewegbar ausgebildet sind, dass die Dichtelemente (48, 49, 51, 52) mittels des an dem jeweiligen Arbeitsanschluss (A1, A2) anliegenden hydraulischen Druckes an eine Wand (78) der Ventilaufnahmebohrung (50) und eine dem jeweiligen Arbeitsanschluss (A1, A2) abgewandte Seitenfläche (79) der Ringnuten (80, 81, 82, 83) dichtend anlegbar sind und das Hydraulikventil (8) vom Pleuel (1) mechanisch entkoppelt vorgesehen ist.

2. Pleuel (1) nach Anspruch 1, **dadurch gekennzeichnet, dass** das Hydraulikventil (8) mit einem radialen Spiel von maximal 100 µm, bevorzugt maximal 80 µm, ganz besonders bevorzugt maximal 50 µm in die Ventilaufnahmebohrung (50) eingebaut vorgesehen ist.

3. Pleuel (1) nach Anspruch 1, **dadurch gekennzeichnet, dass** die Dichtelemente (48, 49, 51, 52), insbesondere in radialer Richtung, zweiteilig vorgesehen sind.

4. Pleuel (1) nach einem der Ansprüche 1 bis 3, **dadurch gekennzeichnet, dass** die Dichtelemente (48, 49, 51, 52) aus Kunststoff, insbesondere PTFE oder PEEK gebildet sind.

5. Pleuel (1) nach Anspruch 4, **dadurch gekennzeichnet, dass** die Dichtelemente (48, 49, 51, 52) als Metalldichtung (86) vorgesehen sind.

6. Pleuel (1) nach Anspruch 5, **dadurch gekennzeichnet, dass** die Metalldichtung (86) als Presshülse vorgesehen ist, in welche das Ventilgehäuse (44) eingeschrumpft ist, wobei Kontaktstellen bzw. Dichtstellen Pleuel (1) zu Presshülse und Presshülse zu Ventilgehäuse (44) sind axial benachbart vorgesehen sind.

7. Pleuel (1) nach einem der vorhergehenden Ansprüche, **dadurch gekennzeichnet, dass** die Dichtelemente (48, 49, 51, 52) nach erfolgter Montage in den Ringnuten (80, 81, 82, 83) auf ein Sollmaß kalibrierbar vorgesehen sind.

## Claims

1. Connecting rod (1) having a hydraulic valve (8) arranged in a valve-receiving bore (50) of the connecting rod (1), with a hydraulic fluid, in particular for switching an actuating piston (31, 32) in the connecting rod (1) for a variable compression of an internal combustion engine, comprising a valve housing (44) which has a first working port (A1) and a second working port (A2) and also a supply port (P) to which a hydraulic pressure of the hydraulic fluid can be applied, with the result that a movable piston (9) arranged in the valve housing (44) is displaceable against the force of a preloaded spring (10), wherein the working ports (A1, A2) are provided so as to be sealed with respect to the supply port (P) and/or with respect to the atmosphere by means of sealing elements (48, 49, 51, 52) arranged in peripheral ring grooves (80, 81, 82, 83),
**characterized in that** the sealing elements (48, 49, 51, 52) are provided as sealing rings which are designed to be deformable, or at least movable, in their sealing seat in such a way that the sealing elements (48, 49, 51, 52) can be brought, by means of the hydraulic pressure prevailing at the respective working port (A1, A2), into sealing contact with a wall (78) of the valve-receiving bore (50) and with a lateral surface (79) of the ring grooves (80, 81, 82, 83) that faces away from the respective working port (A1, A2), and the hydraulic valve (8) is provided so as to be mechanically decoupled from the connecting rod (1).

2. Connecting rod (1) according to Claim 1, **characterized in that** the hydraulic valve (8) is provided so as to be installed in the valve-receiving bore (50) with a radial play of at most 100 µm, preferably at most 80 µm, very particularly preferably at most 50 µm.

3. Connecting rod (1) according to Claim 1, **characterized in that** the sealing elements (48, 49, 51, 52) are provided in two-part form, in particular in the radial direction.

4. Connecting rod (1) according to one of Claims 1 to 3, **characterized in that** the sealing elements (48, 49, 51, 52) are formed from plastic, in particular PTFE or PEEK.

5. Connecting rod (1) according to Claim 4, **characterized in that** the sealing elements (48, 49, 51, 52) are provided as a metal seal (86).

6. Connecting rod (1) according to Claim 5, **characterized in that** the metal seal (86) is provided as a press sleeve into which the valve housing (44) is shrink-fitted, wherein connecting rod (1)-to-press sleeve and press sleeve-to-valve housing (44) contact points or sealing points are provided in an axially adjacent manner.

7. Connecting rod (1) according to one of the preceding claims, **characterized in that** the sealing elements (48, 49, 51, 52), after having been mounted in the ring grooves (80, 81, 82, 83), are provided such that they can be calibrated to a nominal size.

## Revendications

1. Bielle (1) munie d'une vanne hydraulique (8) avec un fluide hydraulique disposée dans un alésage de logement de vanne (50) de la bielle (1), en particulier pour la commande d'un piston de réglage (31, 32) dans la bielle (1) pour une compression variable d'un moteur à combustion interne, comprenant un boîtier de vanne (44), qui présente un premier raccord de travail (A1) et un second raccord de travail (A2) ainsi qu'un raccord d'alimentation (P), qui peut être soumis à une pression hydraulique du fluide hydraulique, par laquelle un piston mobile (9) disposé dans le boîtier de vanne (44) peut être déplacé contre la force d'un ressort précontraint (10), dans laquelle les raccords de travail (A1, A2) sont prévus sous forme étanche par rapport au raccord d'alimentation (P) et/ou par rapport à l'atmosphère au moyen d'éléments d'étanchéité (48, 49, 51, 52) disposés dans des rainures annulaires périphériques (80, 81, 82, 83), **caractérisée en ce que** les éléments d'étanchéité (48, 49, 51, 52) sont prévus sous forme d'anneaux d'étanchéité, qui sont déformables ou au moins déplaçables dans leur siège d'étanchéité, de telle manière que les éléments d'étanchéité (48, 49, 51, 52) puissent être appliqués de façon étanche, au moyen de la pression hydraulique présente au raccord de travail respectif (A1, A2), sur une paroi (78) de l'alésage de logement de vanne (50) et sur une face latérale (79) des rainures annulaires (80, 81, 82, 83) située à l'opposé du raccord de travail respectif (A1, A2) et la vanne hydraulique (8) est prévue sous forme mécaniquement découplée de la bielle (1).

2. Bielle (1) selon la revendication 1, **caractérisée en ce que** la vanne hydraulique (8) est prévue pour être montée avec un jeu radial de maximum 100 µm, de préférence de maximum 80 µm, et de préférence encore de maximum 50 µm dans l'alésage de logement de vanne (50) .

3. Bielle (1) selon la revendication 1, **caractérisée en ce que** les éléments d'étanchéité (48, 49, 51, 52) sont prévus en deux parties, notamment en direction radiale.

4. Bielle (1) selon l'une quelconque des revendications 1 à 3, **caractérisée en ce que** les éléments d'étanchéité (48, 49, 51, 52) sont formés en matière plastique, en particulier en PTFE ou en PEEK.

5. Bielle (1) selon la revendication 4, **caractérisée en ce que** les éléments d'étanchéité (48, 49, 51, 52) sont prévus sous forme de joint métallique (86).

6. Bielle (1) selon la revendication 5, **caractérisée en ce que** le joint métallique (86) est prévu sous forme de douille de serrage, dans laquelle le boîtier de vanne (44) est fretté, dans laquelle il est prévu des points de contact ou des points d'étanchéité de bielle (1) à douille de serrage et de douille de serrage à boîtier de vanne (44) axialement proches.

7. Bielle (1) selon l'une quelconque des revendications précédentes, **caractérisée en ce que** les éléments d'étanchéité (48, 49, 51, 52) sont prévus pour être calibrés à une dimension nominale après le montage opéré dans les rainures annulaires (80, 81, 82, 83).
